# EUROPÄISCHE PATENTSCHRIFT

(11) **EP 1 101 453 B1**
(45) Veröffentlichungstag und Bekanntmachung des Hinweises auf die Patenterteilung: **15.02.2006**
(21) Anmeldenummer: 00124113.2
(22) Anmeldetag: 06.11.2000
(51) Int. Cl.: A61C 13/00, A61C 9/00

(54) **Dentaler Abformlöffel**
Dental impression tray
Porte-empreinte dentaire

(30) Priorität: 22.11.1999 DE 19956103
(43) Veröffentlichungstag der Anmeldung: 23.05.2001
(73) Patentinhaber: 3M ESPE AG, 82229 Seefeld (DE)
(72) Erfinder: Fetz, Johann, 86949 Windach (DE); Wagner, Ingo, 82237 Steinebach (DE); Zech, Joachim, 86916 Kaufering (DE)

(56) Entgegenhaltungen:
- US-A- 1 489 192
- US-A- 4 375 965
- US-A- 5 127 829

## Beschreibung

Dentale Abformlöffel dienen zur Aufnahme einer aushärtbaren Masse, um einen Abdruck des Gebisses oder eines Teils davon zu erhalten. Durch Ausgießen dieses Abdrucks mit Gips oder einem sonstigen Werkstoff läßt sich ein Modell des Gebisses bzw. Gebißteils erstellen, das als Arbeitsgrundlage für den Zahntechniker dienen kann.

Aus DE 196 28 682 C2 ist ein dentaler Abformlöffel insbesondere zur Abformung des Unterkiefers bekannt, wobei ein in der Gebrauchsstellung des Löffels der inneren Seite der Zahnreihe gegenüberstehendes Wandelement dazu dient, den Zungenbereich auszusparen. Dieses Wandelement ist gegenüber der Grundplatte des Löffels in der Weise geneigt, daß sich die ausgehärtete Abformmasse leicht aus dem Löffel entnehmen läßt.

Bei einem weiteren, aus DE-C-26 16 799 bekannten Abformlöffel sind die Kanten senkrechter Wandelemente wulstartig verdickt, um eine Retention auf die Abformmasse beim Abnehmen des Löffel vom Gebiß auszuüben.

Zur Erzielung der gleichen Retentionswirkung sind an den Wandelementen des Abformlöffels nach US 4,375,965 (der die im ersten Teil des Anspruchs 1 angegebenen Merkmals aufweist) nach innen gewölbte Rückhaltelippen und bei dem Abformlöffel nach US 1,489,192 einwärts gerichtete Flansche vorgesehen.

Der weitere, aus US 5,127,829 bekannte Abformlöffel besteht aus einer Bodenplatte und einem Formeinsatz, wobei diese beiden Bauteile durch an Wandelementen vorgesehene, nach innen gerichtete Greifkanten miteinander verriegelt sind.

Insbesondere bei der Verwendung von Silikonen als Abformmasse sind in der ausgehärteten Masse im Übergangsbereich zwischen Zahn bzw. Zahnstumpf und Gingiva sogenannte Fließfahnen erkennbar, d.h. Fehlstellen, die die beim Abformvorgang strömende Masse nicht ausgefüllt hat. Derartige Fehlstellen entstehen aufgrund der Fließeigenschaften der Masse beim Einsetzen des mit der Abformmasse gefüllten Löffels am Kiefer und werden durch die Hydrophobie der Silikone zusätzlich begünstigt. Die von den Zähnen und der Gingiva verdrängte Masse fließt dabei gemäß physikalischen Strömungsgesetzen an einzelnen kleinen Hinterschnitten zwischen Zahn und Gingiva vorbei, wobei sich ähnlich wie bei der Strömungsablösung an einer Tragfläche die erwähnten kleinen Fehlstellen bilden können.

Diese Fehlstellen verfälschen den Abdruck, so daß die anschließenden zahntechnischen Arbeiten an derartigen, für die Einpassung wichtigen Stellen nur ungenau ausgeführt werden, wodurch sich der Arbeitsaufwand des Zahntechnikers und/oder des Zahnarztes erhöht oder in gravierenderen Fällen die Abformung insgesamt unbrauchbar wird.

Der Erfindung liegt die Aufgabe zugrunde, einen dentalen Abformlöffel anzugeben, mit dem sich genaue Abdrücke erzielen lassen. Eine speziellere Aufgabe der Erfindung kann darin gesehen werden, die genannten Fehlstellen in der Abformmasse zu vermeiden.

Die erfindungsgemäße Lösung dieser Aufgabe ist im Anspruch 1 gekennzeichnet. Die danach ausgebildete Strömungsfläche bewirkt, daß die Strömung der Abformmasse beim Anpressen des Löffels an den Kiefer in den Übergangsbereich zwischen Zahnreihe und Gingiva gelenkt wird und daher auch an engen Vertiefungen oder Hinterschnitten in diesem Bereich nicht ohne weiteres vorbeiströmen kann, sondern solche Formationen ausfüllt. Dadurch lassen sich die erwähnten Fehlstellen in der Abformmasse beseitigen oder mindestens reduzieren, so daß das fertige Zahnersatzteil eine bessere Paßform erhält.

Gleichzeitig führt das erfindungsgemäße Wandelement zu Materialeinsparungen bei der Abformmasse, und die strömende Abformmasse läßt sich noch gezielter an die bisher schwierig auszufüllenden Stellen lenken.

Die Maßnahme des Anspruchs 2 ist insofern günstig, als die danach erzeugte Querschnittsverengung zu einer Druckerhöhung in dem Bereich führt, in dem die Tendenz zur Fehlstellenbildung besteht.

Bei der in Anspruch 3 angegebenen Gestaltung ist die erfindungsgemäße Maßnahme am gesamten Zahnbogen wirksam. Demgegenüber hat die Ausgestaltung der Erfindung nach Anspruch 4 den Vorteil einer leichteren Herstellbarkeit des Löffels.

Bei Anwendung der Maßnahme nach Anspruch 5 läßt sich ein Durchdrücken der Zahnreihe auf den Löffelboden verhindern.

Ein Ausführungsbeispiel der Erfindung wird nachstehend anhand der Zeichnung näher erläutert; dann zeigt
- Figur 1: eine perspektivische Darstellung eines dentalen Oberkiefer-Abformlöffels,
- Figur 2: einen Schnitt durch einen Oberkiefer und den in Abstand von diesem gehaltenen Abformlöffel vor der Abdrucknahme, und
- Figur 3: eine der Figur 2 ähnliche Darstellung zur Veranschaulichung der Situation während des Eindrückens der Zahnreihe in die Abformmasse.

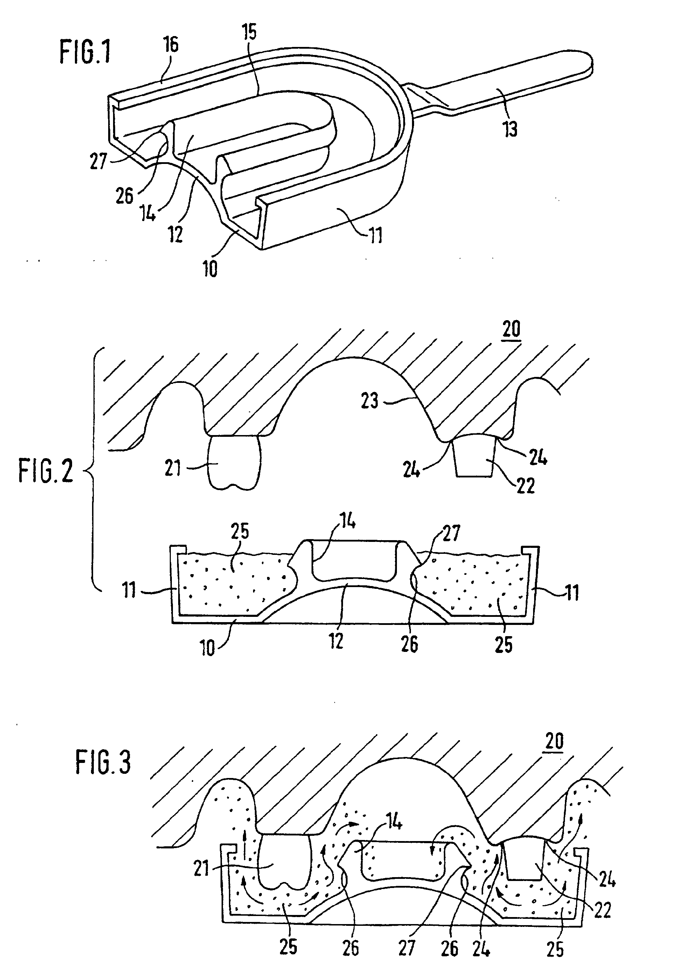

Gemäß Figur 1 weist der Abformlöffel eine etwa hufeisenförmige Grundplatte **10** mit einer Umfangswand **11** und einer den mittleren Bereich der Grundplatte **10** ausfüllenden, nach oben gewölbten Gaumenplatte **12** auf. Am mesialen Bereich der Grundplatte **10** ist ein Griff 13 angebracht.

An die Oberseite der Gaumenplatte **12** ist ein Wandelement **14** in Form eines der Hufeisenform der Grundplatte folgenden bogenförmigen Steges angeformt. Die Oberkante **15** des Wandelements liegt im wesentlichen etwas oberhalb der Oberkante **16** der Umfangswand **11.**

Im oberen Teil der Figur 2 ist ein schematischer Schnitt durch einen Oberkiefer **20** mit einem Zahn **21** und einem Zahnstumpf **22** gezeigt. Wie insbesondere an dem Zahnstumpf **22** veranschaulicht, bestehen in dessen Übergangsbereich zur Gingiva **23** Vertiefungen, Taschen und/oder Hinterschnitte **24.**

Der untere Teil der Figur 2 zeigt einen Schnitt durch den Abformlöffel nach Figur 1, der in dem von der Grundplatte **10,** der Umfangswand **11,** einem Teil der Gaumenplatte **12** und dem Wandelement **14** begrenzten Bereich mit einer Abformmasse **25** gefüllt ist.

Wie in Figur 2 gezeigt, ist das Wandelement **14** im Querschnitt so gestaltet, daß es eine zur Umfangswand **11** hin konkav gewölbte Strömungsfläche **26** bildet. Die Strömungsfläche **26** endet an einer Kante **27** und verläuft an dieser schräg nach oben unter einen Winkel, der in dem gezeigten Ausführungsbeispiel etwa 45° beträgt.

Wird der Löffel aus der in Figur 2 gezeigten Stellung gegen den Oberkiefer **20** bewegt, so drückt sich die den Zahn **21** und den Zahnstumpf **22** enthaltende Zahnreihe in die noch weiche Abformmasse **25** ein. Dabei wird die Abformmasse **25** verdrängt und strömt gemäß den in Figur 3 angedeuteten Pfeilen.

In der in Figur 3 gezeigten Gebrauchsstellung des Löffels weist die Verlängerung der gewölbten Strömungsfläche **26** in den Übergangsbereich zwischen dem Zahnstumpf **22** (bzw. dem Zahn **21**) und der umgebenden Gingiva **23** und damit in den Bereich, in dem die Vertiefungen, Taschen und/oder Hinterschnitte **24** vorhanden sind. Durch diese Gestaltung der Strömungsfläche **26** wird die Strömung der Abformmasse **25** von dem Wandelement **14** in den Übergangsbereich zwischen Zahn/Zahnstumpf 21/ 22 und Gingiva **23** gerichtet, so daß die Abformmasse **25** in die Hinterschnitte **24** gelenkt wird.

Wie aus Figur 3 ferner ersichtlich, ergibt die Form des Wandelements 14 mit der von der Strömungsfläche **26** gebildeten nach außen weisenden Endkante **27** einerseits und der gegenüberstehenden Formation (Zahn/Zahnstumpf **21/22,** Gingiva **23)** andererseits einen Bereich mit verengtem Strömungsquerschnitt. Dadurch wird die Abformmasse **25** in diesem Bereich unter Druck gesetzt und an die abzubildende Formation angedrückt, was die Ausfüllung der Hinterschnitte **24** mit der Abformmasse **25** unterstützt.

Bei dem Ausführungsbeispiel nach Figur 1 verläuft das Wandelement 14 über den gesamten Bogen des Abformlöffels. Zur leichteren Herstellung des Abformlöffels kann es auch zweckmäßig sein, das Wandelement **14** nicht als durchgehenden bogenförmigen Steg sondern so zu gestalten, daß die Strömungsfläche **26** nur im Bereich einzelner Zähne oder Zahngruppen wirksam vorhanden ist.

Ferner ist in dem obigen Ausführungsbeispiel angenommen, daß das Wandelement **14** insbesondere hinsichtlich der Gestaltung der Strömungsfläche **26** und der Endkante **27** über den gesamten Bogen eine konstante Querschnittsform aufweist. Es kann aber auch zweckmäßig sein, die Querschnittsform des Wandelements **14** über den Bogen zu ändern, um die Strömungs- und Druckverhältnisse der Abformmasse **25** in den einzelnen Kieferbereichen noch günstiger zu gestalten.

Neben der Funktion, Fehlstellen in der verfestigten Abformmasse **25** zu vermeiden, hat das Wandelement **14** folgende vorteilhafte Wirkungen:
(1) Die Gefahr des Durchdrückens der Abformmasse **25,** das heißt eines Durchdrückens der Zahnreihe auf die Grundplatte **10** des Löffels, wird dadurch verhindert, daß das Wandelement **14** aufgrund seiner Höhe am Gaumen des Patienten anstößt, bevor die Zahnreihe die Grundplatte **10** berühren kann. Die flachere Ausbildung des Wandelements **14** oberhalb der Endkante **27** der Strömungsfläche **26** bewirkt dabei eine Abstützung des Gaumens.
(2) Das Wandelement **14** begrenzt das Einströmen der Abformmasse **25** in den Gaumenbereich, so daß eine geringere Menge an Abformmasse 25 für einen vollständigen Abdruck ausreicht.
(3) Der Würgereiz, der dadurch entsteht, daß Abformmasse 25 im Gaumenbereich nach hinten in den Rachen strömt, wird vermindert. Ein solcher Würgereiz ist nicht nur für den Patienten lästig sondern auch insofern problematisch, als er zu Stellungsveränderungen führt, die ein ungestörtes Verfestigen der Abformmasse 25 während des Andrückens des Abformlöffels an den Kiefer verhindern.

Das in der Zeichnungen dargestellte Ausführungsbeispiel betrifft einen Oberkiefer-Abformlöffel. Die Erfindung ist in gleicher Weise auch bei Unterkieferlöffeln anwendbar, wenn auch die bei herkömmlichen Unterkieferlöffeln oft vorhandene innere Umfangswand, die dazu dient, den Zungenbereich freizuhalten, bereits zu Strömungsverhältnissen der Abformmasse führt, bei denen die Gefahr von Fehlstellen im Abdruck bis zu einem gewissen Grad vermindert ist.

## Patentansprüche

1. Dentaler Abformlöffel mit einem Wandelement **(14),** das in der Gebrauchsstellung des Löffels an der dem Kiefer zugewandten Innenfläche des Löffels angeordnet ist, der dem Gaumen bzw. der Zunge zugewandten Seite der Zahnreihe **(21, 22)** mindestens teilweise gegenübersteht und einen Querschnitt aufweist, der eine zur Umfangswand **(11)** hin konkav gewölbte Strömungsfläche (**26**) bildet, die an einer Kante (**27**) endet und an dieser schräg nach oben unter einem Winkel von etwa 45° verläuft.

2. Abformlöffel nach Anspruch 1, wobei die Kante **(27)** des Wandelements **(14)** in der Gebrauchsstellung des Löffels mit der gegenüberliegenden Formation **(21, 22, 24)** einen Bereich mit verengtem Strömungsquerschnitt bildet.

3. Abformlöffel nach Anspruch 1 oder 2, wobei das Wandelement (**14**) als Steg ausgebildet und so gewölbt ist, daß sie in der Gebrauchsstellung des Löffels der gesamten Zahnreihe **(21, 22)** gegenübersteht.

4. Abformlöffel nach Anspruch 1 oder 2, wobei das Wandelement **(14)** die konkav gewölbte Fläche **(26)** nur im Bereich einzelner Zähne oder Zahngruppen aufweist.

5. Abformlöffel nach einem der vorhergehenden Ansprüche, wobei die Oberkante **(15)** des Wandelements **(14)** oberhalb der Oberkante **(16)** einer äußeren Umfangswand **(11)** des Löffels liegt.

6. Verfahren zur Herstellung eines Zahnabdrucks, **gekennzeichnet durch** die Verwendung des Abformlöffels nach einem der vorhergehenden Ansprüche.

## Claims

1. Dental impression tray with a wall element (14) which, when the tray is in the position of use, is arranged on the inner surface of the tray directed towards the jaw, lies at least partially opposite that side of the row of teeth (21, 22) directed towards the palate or tongue, and has a cross section forming a flow surface (26) which curves concavely in the direction towards the peripheral wall (11), terminates at an edge (27) and extends obliquely upwards from this at an angle of approximately 45°.

2. Impression tray according to Claim 1, **characterized in that**, when the tray is in the position of use, the edge (27) of the wall element (14) forms, with the opposite formation (21, 22, 24), an area with a narrowed cross section of flow.

3. Impression tray according to Claim 1 or 2, **characterized in that** the wall element (14) is configured as a web and is curved in such a way that, when the tray is in the position of use, it lies opposite the entire row of teeth (21, 22).

4. Impression tray according to Claim 1 or 2, **characterized in that** the wall element (14) has the concavely curved surface (26) only in the area of individual teeth or groups of teeth.

5. Impression tray according to one of the preceding claims, **characterized in that** the top edge (15) of the wall element (14) lies above the top edge (16) of an outer peripheral wall (11) of the tray.

6. Method for producing a dental impression, **characterized by** the use of the impression tray according to one of the preceding claims.

## Revendications

1. Porte-empreinte dentaire qui présente un élément de paroi (14) qui, quand le porte-empreinte est en position d'utilisation, est agencé sur la surface intérieure du porte-empreinte orientée vers la mâchoire, qui se trouve au moins partiellement face au côté de la rangée de dents (21, 22) orienté vers le palais ou la langue et qui présente une section transversale qui forme une surface d'écoulement (26) de forme concave vers la paroi périphérique (11), qui aboutit à une arête (27) et, à partir de celle-ci, s'étend obliquement vers le haut à un angle de sensiblement 45°.

2. Porte-empreinte selon la revendication 1, dans lequel, lorsque le porte-empreinte est en position d'utilisation, l'arête (27) de l'élément de paroi (14) forme avec la formation située en face (21, 22, 24) une zone d'écoulement de section transversale réduite.

3. Porte-empreinte selon la revendication 1 ou 2, dans lequel l'élément de paroi (14) est configuré comme nervure et est incurvé de manière à se trouver face à toute la rangée de dents (21, 22) lorsque le porte-empreinte se trouve en position d'utilisation.

4. Porte-empreinte selon la revendication 1 ou 2, dans lequel l'élément de paroi (14) ne présente la surface (26) de forme concave que dans la zone de certaines dents ou de certains groupes de dents.

5. Porte-empreinte selon l'une quelconque des revendications précédentes, dans lequel l'arête supérieure (15) de l'élément de paroi (14) se trouve au-dessus de l'arête supérieure (16) d'une paroi périphérique extérieure (11).

6. Procédé d'obtention d'une empreinte dentaire, **caractérisé par** l'utilisation du porte-empreinte selon l'une quelconque des revendications précédentes.
